(19) Europäisches Patentamt

European Patent Office

Office européen des brevets

(11) **EP 1 197 327 B1**

(12) **EUROPÄISCHE PATENTSCHRIFT**

(45) Veröffentlichungstag und Bekanntmachung des Hinweises auf die Patenterteilung:
**18.01.2006 Patentblatt 2006/03**

(51) Int Cl.:
*B32B 27/36* *(2006.01)*

(21) Anmeldenummer: **01122696.6**

(22) Anmeldetag: **01.10.2001**

(54) **Koextrudierte, zumindest einseitig matte, biaxial orientierte Polyesterfolie**

Coextruded, at least one-sided mat, biaxially oriented polyester film

Film de polyester, mat, au moins sur une face et à orientation biaxiale

(84) Benannte Vertragsstaaten:
**DE FR GB IT LU**

(30) Priorität: **14.10.2000 DE 10051083**

(43) Veröffentlichungstag der Anmeldung:
**17.04.2002 Patentblatt 2002/16**

(73) Patentinhaber: **Mitsubishi Polyester Film GmbH**
**65203 Wiesbaden (DE)**

(72) Erfinder:
• **Bartsch, Stefan, Dr.**
**65199 Wiesbaden (DE)**

• **Pfeiffer, Herbert, Dr. Professor**
**55126 Mainz (DE)**

(74) Vertreter: **Schweitzer, Klaus et al**
**Patentanwaltskanzlei Zounek**
**Industriepark Kalle-Albert**
**Gebäude H391**
**Rheingaustrasse 190**
**65203 Wiesbaden (DE)**

(56) Entgegenhaltungen:
**EP-A- 0 976 548     US-A- 4 399 179**
**US-A- 5 073 435**

**Beschreibung**

Die Erfindung betrifft eine koextrudierte, zumindest einseitig matte, biaxial orientierte Polyesterfolie bestehend aus mindestens einer Basisschicht (B), die mindestens 70 Gew.% thermoplastischen Polyester enthält und mindestens einer auf der Basisschicht (B) aufgebrachten matten Deckschicht (A). Die Erfindung betrifft weiterhin ein Verfahren für die Herstellung der Folie und ihre Verwendung.

Die erfindungsgemäße Deckschicht (A) zeichnet sich durch eine charakteristische matte Oberfläche bzw. Optik aus und ist für die Verwendung als Verpackungsfolie oder für Anwendungen im industriellen Sektor gut geeignet.

Die Verpackungsindustrie hat einen hohen Bedarf an transparenten, hochglänzenden Kunststofffolien, wie z.B. biaxial orientierte Polypropylen- oder biaxial orientierte Polyesterfolien. Daneben besteht in zunehmendem Maße ein Bedarf an solchen transparenten Folien, bei denen zumindest eine Oberflächenschicht nicht hochglänzend ist, sondern sich durch ein charakteristisches mattes Erscheinungsbild auszeichnet und dadurch z.B. der Verpackung ein besonderes attraktives und damit werbewirksames Aussehen verleiht.

Die EP-A-0 976 548 offenbart eine biaxial orientierte Polyesterfolie mit einer Basisschicht, die zu mindestens 80 Gew.-% aus einem thermoplastischen Polyester besteht, und mindestens einer matten Deckschicht, welche eine Mischung bzw. ein Blend aus zwei Komponenten I und II enthält. Die Erfindung betrifft weiterhin ein Verfahren zur Herstellung der Folie und ihre Verwendung.

In der EP 347 646 wird eine biaxial orientierte Polyesterfolie beschrieben, die mindestens eine Deckschicht (A) aufweist, die einen Füllstoff in einer Konzentration von 0,5 bis 50 % enthält, wobei der Durchmesser dieses Füllstoffes in einem bestimmten Verhältnis zur Schichtdicke der Deckschicht steht. Weiterhin weist die Deckschicht eine bestimmte Dicke und einen bestimmten Kristallisationsgrad auf, der mit Hilfe der Raman-Spektroskopie ermittelt wird. Auf Grund der Topographie der Deckschicht A eignet sich die Folie insbesondere für magnetische Aufzeichnungsbänder. Über den erzielten Glanz der Deckschicht A gibt die Schrift keine Auskunft. Eine nach der EP 347 646 (Beispiel 1) hergestellte Folie hatte nicht die gewünschte matte Oberfläche. Der Glanz dieser Oberfläche liegt außerhalb dem in dieser Schrift beanspruchten Bereich.

In der EP-A-0 053 498 wird eine mehrschichtige, biaxial orientierte Polyesterfolie beschrieben, die eine transparente Basisschicht und auf mindestens einer Seite dieser Schicht eine matt scheinende weitere Schicht aufweist. Die matt scheinende Schicht besteht im Wesentlichen aus einem Ethylenterephthalat-Copolyester, dessen Copolymeres, 1 bis 20 mol-%

$$H(-OCH_2CH_2-)_n OH$$

der

$$H(-OCH_2CH_2-)_{n-1} O-C_6H_4-O-(CH_2CH_2O-)_{n-1}H$$

der

$$H(-OCH_2CH_2-)_{n-1}O-C_6H_4-X-C_6H_4-O-(CH_2CH_2O-)_{n-1}H$$

(n ist eine ganze Zahl von 2 bis 140, X steht für -CH$_2$-, -C(CH$_3$)$_2$- oder -SO$_2$-) und inerte organische Partikel mit einem mittleren Durchmesser von 0,3 bis 20 $\mu$m in einer Konzentration von 3 bis 40 % enthält, bezogen auf die matt scheinende Schicht. Die Folie zeichnet sich durch einen hohen Mattgrad (Glanz kleiner 15) und eine für gewisse Anwendungen noch akzeptable Transparenz (größer als 60%) aus. Nachteilig an dieser Folie ist, dass sie im Fall einer ABA-Struktur nicht bedruckbar und im Fall einer AB-Struktur nicht (auf schnelllaufenden Maschinen) zu verarbeiten ist. Außerdem weist sie Mängel bei der Herstellung auf und sie ist für viele Anwendungen zu trüb.

Ebenfalls bekannt sind nach dem Stand der Technik matte, milchig scheinende, biaxial orientierte Polyesterfolien.

In der DE-A 23 53 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass bei der Herstellung der Folie anfallendes Verschnittmaterial (im Wesentlichen ein Gemisch aus Polyesterrohstoff und Ethylen- oder Propylen-Mischpolymer) nicht mehr als Regenerat eingesetzt werden kann, da ansonsten die Folie gelb wird. Das Verfahren ist damit aber unwirtschaftlich und die mit Regenerat produzierte, gelbliche Folie konnte sich am Markt nicht durchsetzen. Bei Erhöhung der Konzentration des Mischpolymeren im Polyester verliert die Folie im Allgemeinen ihren milchigen Charakter und wird weiß mit hoher Opazität.

In der US-PS 3,154,461 wird ein Verfahren zur Herstellung einer biaxial orientierten Folie aus thermoplastischem Kunststoff (z.B. Polyethylenterephthalat, Polypropylen) mit matter Oberfläche beansprucht, bei dem die Folie inkompressible Partikel (z.B. Calciumcarbonat, Siliciumdioxid) in einer Größe von 0,3 bis 20 $\mu$m in einer Konzentration von 1 bis 25 % enthält. Weiterhin ist in dieser Anmeldung die matte Folie, hergestellt nach dem dort angegebenen Verfahren, beansprucht. Für viele Anwendungen ist die nach dem Verfahren der US-PS hergestellte Folie aber zu trüb.

Aufgabe der vorliegenden Erfindung war es daher, eine zumindest einseitig matte, biaxial orientierte Polyesterfolie bereitzustellen, die die Nachteile der genannten Folien nach dem Stand der Technik nicht aufweist und die sich insbesondere durch einen hervorragenden Mattgrad, bei gleichzeitig guter Transparenz, einer sehr guten Herstellbarkeit und einer sehr guten Verarbeitbarkeit auszeichnet. Außerdem soll dafür Sorge getragen werden, dass die Folie auch auf schnelllaufenden Verarbeitungsmaschinen verarbeitet werden kann. Bei der Herstellung der Folie soll weiterhin gewährleistet sein, dass bei der Folienherstellung anfallendes Verschnittmaterial als Regenerat in einer Menge von bis zu 60 Gew.-%, bezogen auf das Gesamtgewicht der Folie, wieder zu dem Herstellprozess zurückgeführt werden kann, ohne dass dabei die physikalischen und optischen Eigenschaften der Folie nennenswert negativ beeinflusst werden.

Die Aufgabe wird erfindungsgemäß durch die Bereitstellung einer zumindest einseitig matten, biaxial orientierten Polyesterfolie mit mindestens einer Basisschicht (B), die mindestens 70 Gew.-% thermoplastischen Polyester enthält und mindestens einer matten Deckschicht (A) gelöst, wobei die matte Deckschicht (A) ein Pigmentsystem enthält, das durch die folgenden Merkmale gekennzeichnet ist,

a) der mittlere Durchmesser der Pigmentkörner ($d_{50}$-Wert) liegt im Bereich von 2 bis 5 $\mu$m

b) die Streubreite der Verteilung der Korngröße der Pigmentkörner, ausgedrückt durch den SPAN 98, ist kleiner/gleich 1,9, und

c) die Konzentration der Pigmentkörner liegt im Bereich 1,0 bis 10 Gew.-%, bezogen auf das Gewicht der Deckschicht (A),

und dass die matte Deckschicht (A) einen nach DIN 67 530 bei 60° gemessenen Glanzwert von kleiner/gleich 80 hat.

Die Unteransprüche geben bevorzugte Ausführungsformen der Erfindung an, die nachstehend näher erläutert werden.

Erfindungsgemäß ist die Folie zumindest zweischichtig und umfaßt dann als Schichten die Basisschicht (B) und die matte Deckschicht (A).

Die Basisschicht (B) der Folie besteht bevorzugt zu mindestens 80 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform besteht die Basisschicht Polyethylenterephthalat-Homopolymer. Die restlichen Monomereinheiten stammen aus anderen aliphatischen, cycloaliphatischen oder aromatischen Diolen bzw. Dicarbonsäuren, wie sie auch in der Schicht (A) vorkommen können.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (Propan-1,3-diol, Butan-1,4-diol, Pentan-1,5-diol und Hexan-1,6-diol) oder verzweigte aliphatische Glykole mit bis zu 6 KohlenstoffAtomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$ X-$C_6H_4$OH, wobei X für-$CH_2$ , -$C(CH_3)_2$-, -$C(CF_3)_2$-, -O-, -S- oder -$SO_2$,- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphthalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Deckschicht (A) und eventuelle weitere Deckschichten können prinzipiell die gleichen Polymere verwendet werden, wie für die Basisschicht (B). Daneben können in den Deckschichten aber auch andere Materialien enthalten sein, wobei dann die Deckschicht(en) bevorzugt aus einem Gemisch von Polymeren, einem Copolymeren oder einem Homopolymeren besteht, welches Ethylen-isophthalat-Einheiten und/oder Ethylen-2,6-naphthalat-Einheiten und/oder Ethylen-terephthalat-Einheiten enthalten. Bis zu 10 Mol% der Polymere können aus weiteren Comonomeren bestehen.

Zur Erzielung der gewünschten Mattheit/des gewünschten Mattgrades enthält die Deckschicht (A) zusätzlich das bereits erwähnte Pigmentsystem in einer Menge im Bereich von 1,0 bis 10,0 Gew.- %, bezogen auf das Gewicht der Deckschicht (A). In der bevorzugten Ausführungsform der Folie gemäß der vorliegenden Erfindung liegt die Menge an Pigment im Bereich von 1,1 bis 7,5 Gew.-%, in der besonders bevorzugten Ausführungsform von 1,2 bis 5,0 Gew.-%, und richtet sich im Wesentlichen nach den zu erzielenden optischen Eigenschaften der Folie.

Typische den Mattgrad der Folie begünstigende Partikelsysteme sind anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikeln.

Daneben können auch Mischungen von zwei und mehreren verschiedenen Partikelsystemen oder Mischungen von Partikelsystemen in gleicher chemischer Zusammensetzung, aber unterschiedlicher Partikelgröße gewählt werden. Die Partikel können dem Polyester der Deckschicht (A) oder der weiteren Deckschicht der Folie in den jeweils vorteilhaften Konzentrationen, z.B. als glykolische Dispersion während der Polykondensation oder über Masterbatche bei der Extrusion zugegeben werden.

Bevorzugte Partikeln sind $SiO_2$ in kolloidaler und in kettenartiger Form. Diese Partikeln werden sehr gut in die Polymermatrix eingebunden.

Es wurde gefunden, dass der mittlere Partikeldurchmesser und die Streubreite des verwendeten Pigmentsystem entscheidend den Mattgrad und die Herstellung der Folie beeinflussen.

Zur Erzielung eines möglichst hohen Mattgrades (d.h. eines möglichst geringen Glanzes) und zur Erzielung einer guten Herstellbarkeit enthält die Deckschicht (A) der Folie gemäß der vorliegenden Erfindung ein Pigmentsystem, bei dem der mittlere Durchmesser der Pigmentkörner (der $d_{50}$-Wert) im Bereich von 2,0 bis 5,0 $\mu$m liegt und bei dem die Streuung der Verteilung der Korngröße der Pigmentkörner (ausgedrückt durch den SPAN 98) kleiner/gleich 1,9 ist.

In der bevorzugten Ausführungsform enthält die Deckschicht (A) der Folie gemäß der vorliegenden Erfindung ein Pigmentsystem, bei dem der mittlere Durchmesser der Pigmentkörner im Bereich von 2,1 bis 4,9 $\mu$m liegt und die Streuung der Verteilung der Korngröße der Pigmentkörner kleiner/gleich 1,8 ist. In der besonders bevorzugten Ausführungsform enthält die Deckschicht (A) der Folie gemäß der vorliegenden Erfindung ein Pigmentsystem, bei dem der mittlere Durchmesser der Pigmentkörner im Bereich von 2,2 bis 4,8 $\mu$m liegt und die Streuung der Verteilung der Korngröße der Pigmentkörner kleiner/gleich 1,7 ist.

Enthält die Deckschicht (A) der Folie dagegen ein Pigmentsystem, bei dem der mittlere Durchmesser und die Streuung außerhalb des erfindungsgemäßen Bereiches liegt, so wirkt sich dies nachhaltig negativ auf den Mattgrad und/oder die Herstellbarkeit der Folie aus.

Enthält die Deckschicht (A) der Folie dagegen ein Pigmentsystem, bei dem der mittlere Durchmesser größer als 5,0 $\mu$m und die Streuung größer als 1,9 sind, so wird der Mattgrad und die Herstellbarkeit der Folie schlechter, d.h. der Glanz wird in unerwünschtem Maße höher und die Folie neigt bei der Herstellung zu vermehrten Abrissen.

Enthält die Deckschicht (A) der Folie dagegen ein Pigmentsystem, bei dem der mittlere Durchmesser kleiner als 2,0 $\mu$m und die Streuung größer als 1,9 sind, so wird ebenfalls der Mattgrad und die Herstellbarkeit der Folie schlechter, d.h. der Glanz wird in unerwünschtem Maße höher und die Folie neigt bei der Herstellung zu vermehrten Abrissen.

In einer besonderen Ausführungsform der Erfindung enthält die Deckschicht (A) neben dem Ethylenterephthalat-Homopolymer oder dem Ethylenterephthalat-Copolymer eine weitere polymere Komponente I. Diese Komponente I ist ein Copolyester, welcher aus dem Kondensationsprodukt der folgenden Monomeren bzw. deren zur Bildung von Polyestern befähigten Derivaten besteht:

a) 65 bis 95 Mol-% Isophthalsäure;
b) 0 bis 30 Mol% wenigstens einer aliphatischen Dicarbonsäure mit der Formel $HOOC(CH_2)_nCOOH$, wobei n im Bereich von 1 bis 11 liegt;
c) 5 bis 15 Mol-% wenigstens eines Sulfomonomeren enthaltend eine Alkalimetallsulfonatgruppe an dem aromatischen Teil einer Dicarbonsäure;
d) die zur Bildung von 100 Mol% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente I bildenden Monomeren.

Zur ausführlichen Beschreibung der Komponente I siehe auch die EP-A-0 144 878, auf die hier ausdrücklich Bezug genommen wird.

Komponente I wird zweckmäßiger Weise als eine weitere polymere Komponente der Deckschicht (A) zugefügt, wobei der Gewichtsanteil bis zu 30 Gew.% ausmachen kann, bezogen auf das Gewicht der Deckschicht (A). Die Komponente I bildet in diesem Fall mit den anderen in dieser Schicht vorhandenen Polymeren ein Blend oder eine Mischung oder aber auch ein Copolymeres durch Umesterung in der Extrusion.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepresste Formkörper kleiner Größe, z.B. linsen- oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die Komponente I und das entsprechende Polymere für die jeweilige Schicht jeweils für sich getrennt dem Extruder für die Basisschicht/andere Schicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten, welcher nicht mehr in die ursprünglichen Bestandteilen zerlegt werden kann. Ein Blend weist Eigenschaften wie ein homogener Stoff auf und kann entsprechend durch geeignete Parameter charakterisiert werden.

Die matte Deckschicht (A) wird in einer günstigen Ausführungsform durch den folgenden Satz von Parametern gekennzeichnet:

a) die Rauigkeit der Folie, ausgedrückt durch ihren $R_a$-Wert, liegt im Bereich von 150 bis 1000 nm, bevorzugt von 175 bis 950 nm, besonders bevorzugt von 200 bis 900 nm. Kleinere Werte als 150 nm haben negative Auswirkungen auf den Mattheitsgrad der Oberfläche, größerer Werte als 1000 nm beeinträchtigen die optischen Eigenschaften der Folie.

b) Der Messwert der Gasströmung liegt im Bereich von 0 bis 50 s, bevorzugt im Bereich von 0 bis 45 s. Bei Werten oberhalb von 50 wird der Mattheitsgrad der Folie negativ beeinflusst.

Die Basisschicht (B) kann ebenfalls zusätzlich übliche Additive, wie beispielsweise Stabilisatoren und/oder Pigmente (=Füller) enthalten. Als Stabilisatoren werden vorteilhaft beispielsweise Phosphorverbindungen, wie Phosphorsäure oder Phosphorsäureester, eingesetzt.

Typische Pigmente (Füller) für die Basisschicht (B) sind wie für die Deckschicht(en) angegebene anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikeln.

In einer besonders vorteilhaften Ausführungsform enthält die Basisschicht (B) nur die über das Regenerat eingebrachten Pigmente. Hierdurch wird eine Folie mit besonders niedriger Trübung hergestellt.

In der vorteilhaften Verwendungsform besteht die Folie aus drei Schichten, der Basisschicht (B) und beidseitig auf dieser Basisschicht (B) aufgebrachten Deckschichten (A) und (C), wobei die Deckschicht (A) matt ist und das bereits erwähnte Pigmentsystem enthält.

Zwischen der Basisschicht (B) und den Deckschichten kann sich gegebenenfalls noch eine Zwischenschicht befinden. Diese kann wiederum aus den für die Basisschicht (B) beschriebenen Polymeren bestehen. In einer besonders bevorzugten Ausführungsform besteht die Zwischenschicht aus dem für die Basisschicht (B) verwendeten Polyester. Die Zwischenschicht kann auch die beschriebenen üblichen Additive enthalten. Die Dicke der Zwischenschicht ist im allgemeinen größer als 0,3 μm und liegt vorzugsweise im Bereich von 0,5 bis 15 μm, insbesondere im Bereich von 1,0 bis 10 μm, besonders bevorzugt im Bereich von 1,0 bis 5 μm.

Bei der besonders vorteilhaften dreischichtigen Ausführungsform der erfindungsgemäßen Folie liegt die Dicke der Deckschichten (A) und (C) im allgemeinen im Bereich von 0,1 bis 5,0 μm, bevorzugt im Bereich von 0,2 bis 4,5 μm, besonders bevorzugt im Bereich von 0,3 bis 4,0 μm, wobei die Deckschichten (A) und (C) gleich oder verschieden dick sein können.

Die Gesamtdicke der erfindungsgemäßen Polyesterfolie kann innerhalb bestimmter Grenzen variieren. Sie beträgt 3 bis 80 μm, insbesondere 4 bis 50 μm, vorzugsweise 5 bis 30 μm, wobei die Basisschicht (B) einen Anteil von vorzugsweise 5 bis 97 % an der Gesamtdicke hat.

Die Polymeren für die Basisschicht (B) und die beiden Deckschichten (A) und (C) werden zur Herstellung der Folie drei Extrudern zugeführt. Etwa vorhandene Fremdkörper oder Verunreinigungen lassen sich aus der Polymerschmelze vor der Extrusion durch geeignete Filter entfernen. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die Erfindung betrifft so auch ein Verfahren zur Herstellung der erfindungsgemäßen Polyesterfolie nach dem Koextrusionsverfahren.

Im Rahmen dieses Verfahrens wird so vorgegangen, dass die den einzelnen Schichten (A), (B) und (C) der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist.

Zunächst wird, wie beim Koextrusionsverfahren üblich, das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die biaxiale Streckung wird im allgemeinen sequentiell durchgeführt. Dabei wird die Vorfolie vorzugsweise zuerst in Längsrichtung (d.h. in Maschinenrichtung, = MD-Richtung) und anschließend in Querrichtung (d.h. senkrecht zur Maschinenrichtung, = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche(n) der Folie nach den bekannten Verfahren in-line beschichten. Die in-Line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Für die Herstellung einer Folie mit einem sehr hohen Mattgrad (= sehr niedrigem Glanz) und einer verbesserten Transparenz hat es sich als günstig erwiesen, wenn die planare Orientierung $\Delta p$ der Folie kleiner ist als $\Delta p = 0{,}170$, bevorzugt kleiner ist als $\Delta p = 0{,}168$ und ganz bevorzugt kleiner ist als $\Delta p = 0{,}166$. In diesem Fall ist die Festigkeit der Folie in Dickenrichtung so groß, dass bei der Messung der Siegelnahtfestigkeit definitiv die Siegelnaht aufgetrennt wird und die Folie nicht einreisst und weiterreisst.

Es hat sich herausgestellt, dass die wesentlichen Einflussgrößen auf die planare Orientierung $\Delta p$ die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\triangle p = 0{,}171$ mit dem Parametersatz $\lambda_{MD} = 4{,}8$ und $\lambda_{TD} = 4{,}0$ , die Strecktemperaturen in Längs- und in Querrichtung $T_{MD} = 80$ bis 118 °C und $T_{TD} = 80$ bis 125 °C, so erhält man durch Erhöhung der Längsstrecktemperatur auf $T_{MD} = 80$ bis 125 °C oder durch Erhöhung der Querstrecktemperatur auf $T_{TD} = 80$ bis 135 °C oder durch Absenkung des Längsstreckverhältnisses auf $\lambda_{MD} = 4{,}3$ oder durch Absenkung des Querstreckverhältnisses auf $\lambda_{TD} = 3{,}7$ eine planare Orientierung $\Delta p$, die im gewünschten Bereich liegt. Die Folienbahngeschwindigkeit betrug hierbei 340 m/min und der SV-Wert des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter geringfügig verschieden sein. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität wird so eingestellt, dass die daraus resultierende Oberflächenspannung im Bereich von über 45 mN/m liegt.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkende Schichten. Es bietet sich an, diese zusätzliche Schichten über In-line-Beschichtung mittels wässriger Dispersionen vordem Streckschritt in Querrichtung auf die Folie aufzubringen.

Die erfindungsgemäße einseitig matte Folie zeichnet sich durch hervorragende optische Eigenschaften, d.h. einen niedrigen Glanz und eine hohe Transparenz, ein sehr gutes Handling und durch ein sehr gutes Verarbeitungsverhalten aus.

Daneben ist bei der Herstellung der Folie gewährleistet, dass Verschnittmaterial, das bei der Herstellung der Folie in größeren Mengen anfällt, als Regenerat in einer Menge im Bereich von 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die Folie eignet sich demnach ganz hervorragend für den Einsatz in der flexiblen Verpackung und zwar insbesondere dort, wo ihre hervorragenden optischen Eigenschaften und ihre gute Verarbeitbarkeit voll zum Tragen kommt. Dies ist insbesondere ihr Einsatz auf schnelllaufenden Verpackungsmaschinen.

Die nachstehende Tabelle (Tabelle 1) fasst die wichtigsten erfindungsgemäßen Folieneigenschaften noch einmal auf einen Blick zusammen.

Tabelle 1

|  | erfindungsgem. Bereich | bevorzugt | besonders bevorzugt | Einheit | Messmethode |
|---|---|---|---|---|---|
| DECKSCHICHT (A) |  |  |  |  |  |
| Glanz, 60° | < 80 | < 70 | < 60 |  | DIN 67530 |
| COF | < 0,6 | < 0,5 | < 0,40 |  | DIN 53375 |
| Mittlere Rauigkeit $R_a$ | 150 bis 1000 | 175 bis 950 | 200 bis 900 | [nm] | DIN 4768, Cut-off von 0,25 mm |
| Messwertbereich für die Gasströmung | 0-50. | 0 - 45 |  | [sec] | intern |
| weitere Folieneigenschaften |  |  |  |  |  |
| Trübung | < 50 | < 45 | < 40 | [%] | ASTM-D 1003-52 |
| Planare Orientierung (optional) | < 0,170 | < 0,168 | < 0,165 |  | intern |

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN 53726, in Dichloressigsäure gemessen.
Die intrinsische Viskosität (IV) berechnet sich wie folgt aus der Standardviskosität

$$IV\ (DCE) = 6{,}907 \cdot 10^{-4}\ SV\ (DCE) + 0{,}063096$$

**Reibung (COF)**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Trübung**

Die Trübung nach Hölz wurde in Anlehnung an ASTM-D 1003-52 bestimmt, wobei jedoch zur Ausnutzung des optimalen Messbereichs an vier übereinanderliegenden Folienlagen gemessen und anstelle einer 4°-Lochblende eine 1 °-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezipienten einen Druckanstieg von 56 mbar zu bewirken. Messbedingungen:

| | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Bestimmung der planaren Orientierung $\Delta$p**

Die Bestimmung der planaren Orientierung erfolgt über die Messung der Brechungsindizes mit dem Abbe-Refraktometer nach der internen Betriebsvorschrift 24.

| Probenvorbereitung: | |
|---|---|
| Probengröße und Probenlänge: | 60 bis 100 mm |
| Probenbreite: | entspricht Prismenbreite von 10 mm |

Zur Bestimmung von $n_{MD}$ und $n_a$ (=$n_z$) muss die zu messende Probe aus der Folie ausgeschnitten werden, bei der die Laufkante der Probe exakt mit der TD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1,49 und 1,50 zu sehen ist.

Jetzt wird der Brechungsindex in $n_a$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ ($=n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_a$ ($= n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Messung des mittleren Durchmessers $d_{50}$**

Die Bestimmung des mittleren Durchmessers $d_{50}$ wurde mittels Laser auf einem Malvem MasterSizer nach der Standardmethode durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes.

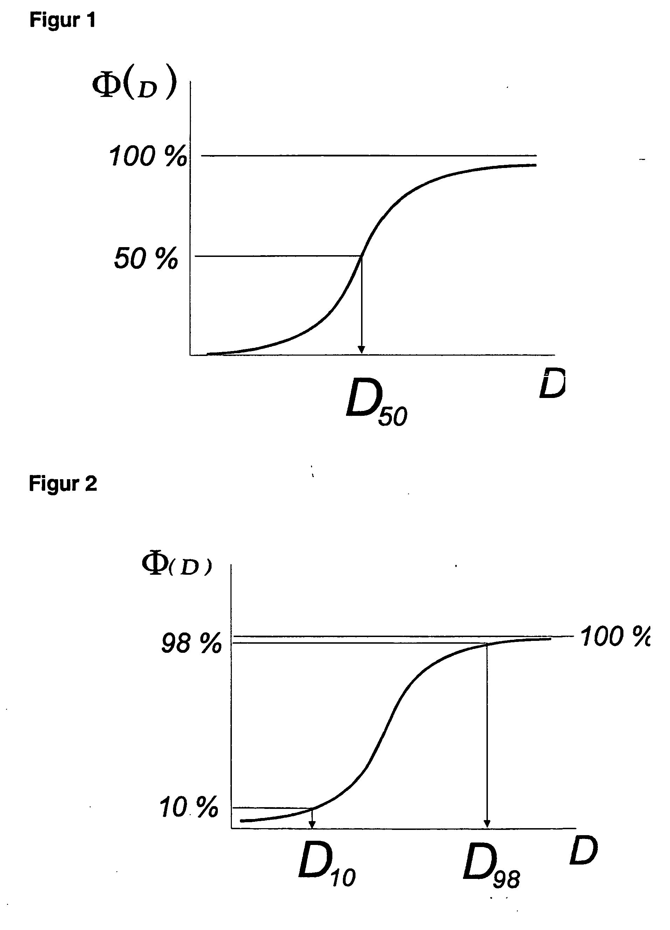

Der $d_{50}$-Wert wird dabei definitionsgemäß aus der (relativen) Summenkurve der Korngrößenverteilung bestimmt: Der Schnittpunkt des 50 % Ordinatenwertes der Summenkurve liefert auf der Abszissenachse sofort den gewünschten $d_{50}$-Wert. Wie genau der Wert aus der Kurve zu ermitteln ist, veranschaulicht die beigefügte Figur 1.

**Messung der SPAN 98**

Die Bestimmung der SPAN 98 wurde mit dem gleichen Messgerät durchgeführt, wie oben bei der Bestimmung des mittleren Durchmessers $d_{50}$ beschrieben. Die SPAN 98 ist dabei wie folgt definiert:

$$SPAN98 = \frac{d_{98} - d_{10}}{d_{50}}$$

Für die Ermittlung von $d_{98}$ und $d_{10}$ wird wiederum die (relative) Summenkurve der Korngrößenverteilung zu Grunde gelegt. Der Schnittpunkt des 98 % Ordinatenwertes der Summenkurve liefert auf der Abszissenachse sofort den gewünschten $d_{98}$-Wert und der Schnittpunkt des 10 % Ordinatenwertes der Summenkurve liefert auf der Abszissenachse sofort den gewünschten $d_{10}$-Wert. Wie dies genau zu verstehen ist, verdeutlicht die beigefügte Figur 2.

**Beispiel 1**

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht (B) zugeführt. Ebenfalls wurden Chips aus Polyethylenterephthalat und einem Füllstoff dem Extruder für die nicht matte Deckschicht (C) zugeführt.

Daneben wurden Chips aus einem Polyethylenterephthalat (hergestellt über das Umesterungsverfahren mit Mn als Umesterungskatalysator, Mn-Konzentration: 100 ppm) bei einer Temperatur von 150 °C auf eine Restfeuchte von unterhalb 100 ppm getrocknet und dem erfindungsgemäßen Füllstoff dem Extruder für die matte Deckschicht (A) zugeführt.

Dann wurde durch Koextrusion und anschließende stufenweise Orientierung in Längs- und Querrichtung eine transparente, dreischichtige Folie mit ABC-Aufbau und einer Gesamtdicke von 12 μm hergestellt. Die Dicke der jeweiligen Deckschichten ist der Tabelle 2 zu entnehmen.

Deckschicht (A), Mischung aus:

40 Gew.%     Polyethylenterephthalat mit einem SV-Wert von 800
60 Gew.%     Masterbatch aus 95 Gew.-% Polyethylenterephthalat und 5,0 Gew.-% Kieselsäurepartikel (®Sylysia 430 von der Fa. Fuji/Japan) mit einem $d_{50}$-Wert von 3,4 μm und einer SPAN 98 von 1,4.

Basisschicht (B):

100,0 Gew.-%     Polyethylenterephthalat mit einem SV-Wert von 800

Deckschicht (C), Mischung aus:

93,0 Gew.-%     Polyethylenterephthalat mit einem SV-Wert von 800
7,0 Gew.%     Masterbatch aus 97,75 Gew.% Polyethylenterephthalat, 1,0 Gew.-% ®Sylobloc 44 H (synthetisches $SiO_2$ der Fa. Grace) und 1,25 Gew.% ®Aerosil TT 600 (pyrogenes $SiO_2$ der Fa. Degussa)

Die Herstellungsbedingungen in den einzelnen Verfahrensschritten waren:

| | | | | |
|---|---|---|---|---|
| Extrusion: | Temperaturen | A-Schicht: | 270 °C |
| | | B-Schicht: | 290 °C |
| | | C-Schicht: | 290 °C |
| | Düsenspaltweite: | | 2,5 mm |
| | Temperatur der Abzugswalze | | 30 °C |
| Längsstreckung: | Temperatur: | | 80-126 °C |
| | Längsstreckverhältnis: | | 4,0 |
| Querstreckung: | Temperatur: | | 80-135 °C |
| | Querstreckverhältnis | | 4,0 |
| Fixierung: | Temperatur: | | 230 °C |
| | Dauer: | | 3 s |

Die Folie hatte den geforderten niedrigen Glanz und die geforderte niedrige Trübung. Weiterhin zeigt die Folie das gewünschte Handling und das gewünschte Verarbeitungsverhalten. Der Folienaufbau und die erzielten Eigenschaften derart hergestellter Folien sind in den Tabellen 2 und 3 dargestellt.

**Beispiel 2**

Im Vergleich zu Beispiel 1 wurde die Deckschichtdicke der matten Deckschicht (A) von 1,5 auf 2,0 μm bei

sonst identischem Folienaufbau und identischer Herstellungsweise angehoben. Der Mattgrad der Folie hat sich hierdurch verbessert.

**Beispiel 3**

Im Vergleich zu Beispiel 1 wurde jetzt eine 23 $\mu$m dicke Folie produziert. Die Deckschichtdicke der matten Schicht (A) betrug 2,5 $\mu$m und diejenige der nicht matten Schicht (C) betrug 2,0 $\mu$m. Hierdurch konnte der Glanz der Folie weiter herabgesenkt werden. Das Handling der Folie hat sich dabei tendenziell auch noch verbessert.

**Beispiel 4**

Im Vergleich zu Beispiel 3 wurde die Zusammensetzung für die matt scheinende Deckschicht (A) geändert. 20 Gew.-% des Polyethylenterephthalats mit einem SV-Wert von 800 wurden jetzt durch die polymere Komponente I in der matten Deckschicht (A) ersetzt. Die Komponente I setzte sich dabei wie folgt zusammen:

    a) 90 Mol% Isophthalsäure;
    b) 10 Mol% Natrium-5-sulfoisophthalsäure.

Durch die Zuführung der Komponente I in die matte Deckschicht (A) wurde die Transparenz der Folie weiter verbessert.

Deckschicht (A). Mischung aus:

| | |
|---|---|
| 20 Gew.-% | Polyethylenterephthalat mit einem SV-Wert von 800 |
| 20 Gew.-% | Komponente I |
| 60 Gew.-% | Masterbatch aus 95 Gew.-% Polyethylenterephthalat und 5,0 Gew.-% Kieselsäurepartikel (®Sylysia 430 von der Fa. Fuji/Japan) mit einem $d_{50}$-Wert von 3,4 $\mu$m und einer SPAN 98 von 1,4. |

**Vergleichsbeispiel 1**

Im Vergleich zu Beispiel 1 wurde jetzt die matte Deckschicht (A) mit einem Pigmentsystem entsprechend dem Stand der Technik rezepturiert. Der Mattgrad der Folie ist deutlich schlechter geworden.

Deckschicht (A), Mischung aus:

| | |
|---|---|
| 40 Gew.-% | Polyethylenterephthalat mit einem SV-Wert von 800; |
| 60 Gew.-% | Masterbatch aus 95 Gew.-% Polyethylenterephthalat und 5,0 Gew.-% Kieselsäurepartikel mit einem $d_{50}$-Wert von 5,5 $\mu$m und einer SPAN 98 von 1,7. |

## Tabelle 2

| Beispiel | Folien-dicke µm | Folien-aufbau | Schichtdicken µm | | | Pigmente in den Schichten | | | mittlerer Pigment-Durchmesser in Schichten µm | | | Pigment-konzentrationen ppm | | |
|---|---|---|---|---|---|---|---|---|---|---|---|---|---|---|
| | | | A | B | C | A | B | C | A | B | C | A | B | C |
| B 1 | 12 | ABC | 1,5 | 9 | 1,5 | Sylysia 430 | kein | Sylobloc 44 H | 3,4 | | 2,5 | 30000 | 0 | 700 |
| | | | | | | | | Aerosil TT 600 | | | 0,04 | | | 750 |
| B 2 | 12 | ABC | 2,0 | 8,5 | 1,5 | Sylysia 430 | kein | Sylobloc 44 H | 3,4 | | 2,5 | 30000 | 0 | 700 |
| | | | | | | | | Aerosil TT 600 | | | 0,04 | | | 750 |
| B 3 | 23 | ABC | 2,5 | 18,5 | 2,0 | Sylysia 430 | kein | Sylobloc 44 H | 3,4 | | 2,5 | 30000 | 0 | 700 |
| | | | | | | | | Aerosil TT 600 | | | 0,04 | | | 750 |
| B 4 | 23 | ABC | 2,5 | 18,5 | 2,0 | Sylysia 430 | kein | Sylobloc 44 H | 3,4 | | 2,5 | 30000 | 0 | 700 |
| | | | | | | | | Aerosil TT 600 | | | 0,04 | | | 750 |
| VB 1 | 12 | ABC | 1,5 | 9 | 1,5 | d50 = 5,0 | kein | Sylobloc 44 H | 5,0 | | 2,5 | 30000 | 0 | 700 |
| | | | | | | | | Aerosil TT 600 | | | 0,04 | | | 750 |

EP 1 197 327 B1

Tabelle 3

| Beispiel | Reibung COF C-Seite gegen C-Seite | Mittlere Rauigkeit $R_a$ | | Messwerte für die Gasströmung | | $\Delta p$ | Glanz | | Trübung | Wickelverhalten und Handling | Verarbeitungsverhalten |
|---|---|---|---|---|---|---|---|---|---|---|---|
| | | A-Seite | C-Seite | A-Seite | C-Seite | | A-Seite | C-Seite | | | |
| B 1 | 0,40 | 230 | 50 | 10 | 130 | 0,165 | 60 | 140 | 45 | ++ | ++ |
| B 2 | 0,40 | 250 | 50 | 10 | 130 | 0,165 | 55 | 142 | 45 | ++ | ++ |
| B 3 | 0,41 | 250 | 50 | 10 | 130 | 0,165 | 50 | 140 | 47 | ++ | ++ |
| B 4 | 0,40 | 250 | 50 | 10 | 130 | 0,165 | 50 | 140 | 47 | ++ | ++ |
| VB 1 | 0,45 | 210 | 50 | 15 | 130 | 0,165 | 70 | 140 | 55 | ++ | ++ |

Zeichenerklärung beim Wickelverhalten, Handling und beim Verarbeitungsverhalten der Folien:

++: keine Klebeneigung an Walzen oder anderen mechanischen Teilen, keine Blockprobleme beim Wickeln und bei der Verarbeitung auf Verpackungsmaschinen, niedrige Herstellkosten

+: mittlere Herstellkosten

-: Klebeneigung an Walzen oder anderen mechanischen Teilen, Blockprobleme beim Wickeln und bei der Verarbeitung auf Verpackungsmaschinen, hohe Herstellkosten durch aufwendiges Handling der Folie in den Maschinen

EP 1 197 327 B1

**Patentansprüche**

1. Zumindest einseitig matte, biaxial orientierte Polyesterfolie mit mindestens einer Basisschicht (B) aus thermoplastischem Polyester und mindestens einer matten Deckschicht (A), die mindestens 70 Gew.-% thermoplastischen Polyester aus Ethylenglykol- und Terephthalsäure-Einheiten enthält, **dadurch gekennzeichnet, dass** die matte Deckschicht (A) zusätzlich ein Pigmentsystem enthält, das folgende Merkmale aufweist:

   a) der mittlere Durchmesser der Pigmentkörner ($d_{50}$-Wert) liegt im Bereich von 2 bis 5 $\mu$m,
   b) die Streubreite der Verteilung der Korngröße der Pigmentkörner, ausgedrückt durch den SPAN 98, ist kleiner/gleich 1,9, und
   c) die Konzentration der Pigmentkörner liegt im Bereich 1,0 bis 10 Gew.-%, bezogen auf das Gewicht der Deckschicht (A), und dass die matte Deckschicht (A) einen nach DIN 67 530 bei 60° gemessenen Glanzwert von kleiner/gleich 80 hat.

2. Zumindest einseitig matte Polyesterfolie nach Anspruch 1, **dadurch gekennzeichnet, dass** die matte Deckschicht (A) ein Pigmentsystem enthält, das bevorzugt einen mittleren Durchmesser der Pigmentkörner ($d_{50}$-Wert) im Bereich von 2,1 bis 4,9 besitzt, besonders bevorzugt im Bereich von 2,2 bis 4,8 $\mu$m.

3. Zumindest einseitig matte Polyesterfolie nach Anspruch 1 oder 2, **dadurch gekennzeichnet, dass** die matte Deckschicht (A) ein Pigmentsystem enthält, das bevorzugt einen SPAN 98 von kleiner/gleich 1,8 besitzt, besonders bevorzugt von kleiner/gleich 1,7.

4. Zumindest einseitig matte Polyesterfolie nach einem der Ansprüche 1 bis 3, **dadurch gekennzeichnet, dass** die matte Deckschicht (A) eine Dicke im Bereich von 0,1 bis 5 $\mu$m besitzt.

5. Zumindest einseitig matte Polyesterfolie nach einem der Ansprüche 1 bis 3, **dadurch gekennzeichnet, dass** die Deckschicht (A) neben dem thermoplastischen Polyester eine weitere polymere Komponente I enthält, die ein Copolyester aus dem Kondensationsprodukt derfolgenden Monomeren bzw. deren zur Bildung von Polyestern befähigten Derivaten darstellt:

   a) 65 bis 95 Mol-% Isophthalsäure;
   b) 0 bis 30 Mol-% wenigstens einer aliphatischen Dicarbonsäure mit der Formel $HOOC(CH_2)_nCOOH$, wobei n im Bereich von 1 bis 11 liegt;
   c) 5 bis 15 Mol-% wenigstens eines Sulfomonomeren enthaltend eine Alkalimetallsulfonatgruppe an dem aromatischen Teil einer Dicarbonsäure;
   d) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

   wobei die Prozentangaben jeweils bezogen sind auf das Gesamtgewicht aller die Komponente I bildenden Monomeren.

6. Zumindest einseitig matte Polyesterfolie nach Anspruch 5, **dadurch gekennzeichnet, dass** die Deckschicht (A) Komponente I in einer Menge von bis zu 30 Gew.-% enthält, bezogen auf das Gewicht der Deckschicht (A).

7. Zumindest einseitig matte Polyesterfolie nach einem der Ansprüche 1 bis 6, **dadurch gekennzeichnet, dass** die matte Deckschicht (A) eine Rauigkeit, ausgedrückt durch ihren $R_a$-Wert, im Bereich von 150 bis 1000 nm, bevorzugt von 175 bis 950 nm, besonders bevorzugt von 200 bis 900 nm, aufweist und dass ihr Messwert der Gasströmung im Bereich von 0 bis 50 s liegt, bevorzugt im Bereich von 0 bis 45 s.

8. Zumindest einseitig matte Polyesterfolie nach einem der Ansprüche 1 bis 7, **dadurch gekennzeichnet, dass** ihre Gesamtdicke im Bereich von 3 bis 80 $\mu$m, insbesondere von 4 bis 50 $\mu$m, vorzugsweise von 5 bis 30 $\mu$m, liegt, wobei die Basisschicht (B) einen Anteil im Bereich von 5 bis 97 % an der Gesamtdicke hat.

9. Verfahren zur Herstellung einer zumindest einseitig matten Polyesterfolie nach einem der Ansprüche 1 bis 8 nach dem Koextrusionsverfahren, bei dem die den einzelnen Schichten (A), (B) und (C) der Folie entsprechenden Schmelzen durch eine Flachdüse koextrudiert werden, die so erhaltene Folie zur Verfestigung zu einer Vorfolie auf einer oder mehreren Walze/n abgezogen wird, die Vorfolie anschließend biaxial gestreckt, die biaxial gestreckte Folie thermofixiert und gegebenenfalls an der zur Behandlung vorgesehenen Oberflächenschicht noch corona- oder

14

flammbehandelt wird, **dadurch gekennzeichnet, dass** die Längsstreckung bei einer Temperatur im Bereich von 80 bis 130 °C und die Querstreckung im Bereich von 90 bis 150 °C durchgeführt wird und dass das Längsstreckverhältnis auf einen Wert im Bereich von 2,5:1 bis 6:1, bevorzugt von 3:1 bis 5,5:1, eingestellt wird und das Querstreckverhältnis auf einen Wert im Bereich von 3,0:1 bis 5,0:1, bevorzugt von 3,5:1 bis 4,5:1.

10. Verfahren nach Anspruch 9, **dadurch gekennzeichnet, dass** die Streckparameter so eingestellt werden, dass die planare Orientierung $\triangle p$ der Folie kleiner ist als $\triangle p = 0{,}170$, bevorzugt kleiner ist als $\triangle p = 0{,}168$ und ganz bevorzugt kleiner ist als $\triangle p = 0{,}166$.

11. Verfahren nach Anspruch 9 oder 10, **dadurch gekennzeichnet, dass** Verschnittmaterial, das bei der Herstellung der Folie anfällt, als Regenerat in einer Menge im Bereich von 20 bis 60 Gew.-%, bezogen auf das Gesamtgewicht der Folie, wieder der Extrusion zugeführt wird.

12. Verwendung einer Folie nach einem der Ansprüche 1 bis 8 für den Einsatz in der flexiblen Verpackung oder für Labels und Posterlaminate, insbesondere auf schnelllaufenden Verpackungsmaschinen.

## Claims

1. A biaxially oriented polyester film having at least one matt side and with at least one base layer (B) made from thermoplastic polyester and with at least one matt outer layer (A) which comprises at least 70% by weight of thermoplastic polyester made from ethylene glycol units and from terephthalic acid units, wherein the matt outer layer (A) also comprises a pigment system which has the following features:

   a) the median diameter of the pigment grains ($d_{50}$) is in the range from 2 to 5 $\mu$m;
   b) the spread of the distribution of the grain size of the pigment grains, expressed via the SPAN 98, is less than or equal to 1.9, and
   c) the concentration of the pigment grains is in the range from 1.0 to 10% by weight, based on the weight of the outer layer (A), and wherein the matt outer layer (A) has a gloss value less than or equal to 80, measured to DIN 67 530 at 60°.

2. The polyester film having at least one matt side, as claimed in claim 1, wherein the matt outer layer (A) comprises a pigment system which preferably has a median diameter of the pigment grains ($d_{50}$) in the range from 2.1 to 4.9 $\mu$m, particularly preferably in the range from 2.2 to 4.8 $\mu$m.

3. The polyesterfilm having at least one matt side, as claimed in claim 1 or 2, wherein the matt outer layer (A) comprises a pigment system which preferably has a SPAN 98 less than or equal to 1.8, particularly preferably less than or equal to 1.7.

4. The polyester film having at least one matt side, as claimed in any of claims 1 to 3, wherein the matt outer layer (A) has a thickness in the range from 0.1 to 5 $\mu$m.

5. The polyester film having at least one matt side, as claimed in any of claims 1 to 3, wherein the outer layer (A) comprises, besides the thermoplastic polyester, another polymeric component I which is a copolymer composed of the condensation product of the following monomers or, respectively, their derivatives capable of forming polyesters:

   a) from 65 to 95 mol% of isophthalic acid;
   b) from 0 to 30 mol% of at least one aliphatic dicarboxylic acid having the formula $HOOC(CH_2)_nCOOH$, where n is in the range from 1 to 11;
   c) from 5 to 15 mol% of at least one sulfomonomer containing an alkali metal sulfonate group on the aromatic moiety of a dicarboxylic acid;
   d) a copolymerizable aliphatic or cycloaliphatic glycol having from 2 to 11 carbon atoms, in the stoichiometric amount necessary to form 100 mol% of condensate;

where each of the percentages is based on the total amount of all of the monomers forming component I.

6. The polyester film having at least one matt side, as claimed in claim 5, wherein the outer layer (A) comprises up to 30% by weight of component I, based on the weight of the outer layer (A).

7. The polyester film having at least one matt side, as claimed in any of claims 1 to 6, wherein the matt outer layer (A) has a roughness expressed by its $R_a$ value in the range from 150 to 1000 nm, preferably from 175 to 950 nm, particularly preferably from 200 to 900 nm, and wherein its value measured for gas flow is in the range from 0 to 50 s, preferably in the range from 0 to 45 s.

8. The polyester film having at least one matt side, as claimed in any of claims 1 to 7, which has a total thickness in the range from 3 to 80 $\mu$m, in particular from 4 to 50 $\mu$m, preferably from 5 to 30 $\mu$m, from 5 to 97% of the total thickness preferably being made up by the base layer (B).

9. A process for producing a polyester film having at least one matt side, as claimed in any of claims 1 to 8, by coextrusion, in which the melts corresponding to the separate layers (A), (B) and (C) of the film are coextruded through a flat-film die, the resultant film is drawn off on one or more rollers to form a prefilm, the prefilm is then biaxially stretched and the biaxially stretched film is heat-set and, where appropriate, also corona- or flame-treated on the surface intended for treatment, which comprises carrying out the longitudinal stretching at a temperature in the range from 80 to 130°C and the transverse stretching in the range from 90 to 150°C, and comprises setting a longitudinal stretching ratio in the range from 2.5:1 to 6:1, preferably from 3:1 to 5.5:1, and setting a transverse stretching ratio in the range from 3.0:1 to 5.0:1, preferably from 3.5:1 to 4.5:1.

10. The process as claimed in claim 9, wherein the stretching parameters are set so that the planar orientation $\Delta p$ of the film is below 0.170, preferably below 0.168 and very preferably below 0.166.

11. The process as claimed in claim 9 or 10, wherein cut material arising during the process to produce the film can be reintroduced to the extrusion process as regrind in amounts in the range from 20 to 60% by weight, based on the total weight of the film.

12. The use of a film as claimed in any of claims 1 to 8, in flexible packaging or for labels or poster laminates, in particular on high-speed packaging machinery.

**Revendications**

1. Feuille polyester mate au moins sur une face et à orientation biaxiale, comportant une couche de base (B) à base de polyester thermoplastique et au moins une couche de recouvrement mate (A), qui contient au moins 70 % en poids d'un polyester thermoplatique à base d'unités éthylèneglycol et acide téréphtalique, **caractérisée en ce que** la couche de recouvrement mate (A) comprend en outre un système pigmentaire présentant les caractéristiques suivantes :

a) le diamètre moyen des grains de pigments (valeur $d_{50}$) se situe entre 2 et 5 $\mu$m,
b) la dispersion de la répartition de la grandeur des grains de pigments, exprimée par le SPAN 98, est inférieure / égale à 1,9, et
c) la concentration des grains de pigments est située dans la gamme de 1,0 à 10 % en poids, par rapport au poids de la couche de recouvrement (A),

et **en ce que** ladite couche de recouvrement mate (A) comporte un indice de brillance mesuré selon DIN 67 530 à 60 ° inférieur / égal à 80.

2. Feuille polyester mate au moins sur une face, selon la revendication 1, **caractérisée en ce que** la couche de recouvrement mate (A) comporte un système pigmentaire présentant préférentiellement un diamètre moyen des grains de pigments (valeur $d_{50}$) situé entre 2,1 et 4,9, de façon particulièrement préférée entre 2,2 et 4,8 $\mu$m.

3. Feuille polyester mate au moins sur une face, selon la revendication 1 ou 2, **caractérisée en ce que** la couche de recouvrement mate (A) comporte un système pigmentaire présentant préférentiellement un SPAN 98 inférieur / égal à 1,8, de façon particulièrement préférée inférieur / égal à 1,7.

4. Feuille polyester mate au moins sur une face, selon l'une quelconque des revendications 1 à 3, **caractérisée en ce que** la couche de recouvrement mate (A) présente une épaisseur comprise dans la gamme de 0,1 à 5 $\mu$m.

5. Feuille polyester mate au moins sur une face, selon l'une quelconque des revendications 1 à 3, **caractérisée en**

**ce que** la couche de recouvrement mate (A), comporte, outre le polyester thermoplastique, un autre composant polymère I, qui représente un copolyester découlant du produit de condensation des monomères suivants ou de leurs dérivés aptes à la formation de polyesters :

a) 65 à 95 % en moles d'acide isophtalique ;
b) 0 à 30 % en moles au moins d'un acide dicarbonique aliphatique ayant la formule $HOOC(CH_2)_nCOOH$, où n est dans la gamme de 1 à 11 ;
c) 5 à 15 % en moles d'au moins un sulfomonomère comprenant un groupe alcalimetalsulfonate sur la partie aromatique d'un acide dicarbonique ;
d) la quantité stoechiométrique d'un glycol aliphatique nécessaire à la formation d'un condensat de 100 % en moles ou cycloaliphatique copolymérisable, ayant 2 à 11 atomes de carbone ;

où les pourcentages indiqués étant chacun exprimé par rapport au poids total de l'ensemble des monomères formant le composant I.

6. Feuille polyester mate au moins sur une face, selon la revendication 5, **caractérisée en ce que** la couche de recouvrement (A) comprend du composant I en une quantité de 30 % en poids ou moins, par rapport au poids de la couche de recouvrement (A).

7. Feuille polyester mate au moins sur une face, selon l'une quelconque des revendications 1 à 6, **caractérisée en ce que** la couche de recouvrement mate (A) présente une rugosité exprimée par sa valeur $R_a$ dans la gamme de 150 à 1000 nm, préférentiellement de 175 à 950 nm, de façon particulièrement préférée de 200 à 900 nm, et **en ce que** sa valeur de mesure du flux de gaz est située dans la gamme de 0 à 50 s, préférentiellement de 0 à 45 s.

8. Feuille polyester mate au moins sur une face, selon l'une quelconque des revendications 1 à 7, **caractérisée en ce que** son épaisseur totale se situe dans la gamme de 3 à 80 $\mu$m, notamment de 4 à 50 $\mu$m, préférentiellement de 5 à 30 $\mu$m, la couche de base (B) ayant un pourcentage situé dans la gamme de 5 à 97 % de l'épaisseur totale.

9. Procédé de fabrication d'une feuille polyester mate au moins sur une face selon l'une quelconque des revendications 1 à 8 par un procédé de coextrusion , où les compositions fondues correspondant aux différentes couches (A), (B) et (C) de la feuille sont coextrudées par une buse plate, où la feuille ainsi obtenue est tirée à des fins de consolidation, sur un ou plusieurs cylindres pour former une préfeuille, ladite préfeuille subissant alors un allongement biaxial, où la feuille avec cet allongement biaxial est ensuite thermofixée et, éventuellement, traitée par corona ou à la flamme au niveau d'une couche prévue pour ce traitement, **caractérisé en ce que** l'allongement longitudinal se fait à une température dans la gamme de 80 à 130 °C et l'allongement transversal à une température dans la gamme de 90 à 150 °C, et **en ce que** le rapport de l'allongement longitudinal est réglé dans la gamme de 2,5 :1 à 6 :1, de préférence de 3 :1 à 5,5 :1, et le rapport de l'allongement transversal de 3,0 :1 à 5,0 :1, préférentiellement de 3,5 :1 à 4,5 :1.

10. Procédé selon la revendication 9, **caractérisé en ce que** les paramètres de l'allongement sont réglés de telle sorte que l'orientation planaire $\Delta p$ de la feuille est inférieure à $\Delta p = 0,170$, préférentiellement inférieure à $\Delta p = 0,168$ et plus préférentiellement inférieure à $\Delta p = 0,166$.

11. Procédé selon la revendication 9 ou 10, **caractérisé en ce que** du matériau coupé, produit lors de la fabrication de la feuille est renvoyé dans la machine d'extrusion comme régénérat, en une quantité variant entre 20 et 60 % en poids, par rapport au poids total de la feuille.

12. Utilisation d'une feuille selon l'une quelconque des revendications 1 à 8 pour une mise en oeuvre dans des emballages flexibles ou pour des étiquettes et des affiches stratifiées, en particulier dans des machines d'empaquetage rapide.

**Figur 1**

$$\Phi(D)$$

100 %

50 %

$$D_{50}$$

$$D$$

**Figur 2**

$$\Phi(D)$$

98 %

10 %

100 %

$$D_{10}$$   $$D_{98}$$   $$D$$